# EUROPEAN PATENT APPLICATION

(11) **EP 4 261 845 A1**
(43) Date of publication of application: **18.10.2023**
(21) Application number: 21902720.8
(22) Date of filing: 10.12.2021
(51) Int. Cl.: G21C 19/105, G21C 19/02, G21C 7/14

(54) **CONTROL ROD DRIVING MECHANISM WITH SAFETY PROTECTION FUNCTION**

(30) Priority: 11.12.2020 CN 202011463334
(71) Applicant: China Nuclear Power Technology Research Institute Co., Ltd, Shenzhen, Guangdong 518000 (CN); China General Nuclear Power Corporation, Shenzhen, Guangdong 518026 (CN); CGN Power Co., Ltd., Shenzhen, Guangdong 518026 (CN)
(72) Inventor: LU, Zhaohui, Shenzhen, Guangdong 518000 (CN); CHEN, Yeqing, Shenzhen, Guangdong 518000 (CN); JIN, Shuwu, Shenzhen, Guangdong 518000 (CN); LI, Zewen, Shenzhen, Guangdong 518000 (CN); LIU, Yanan, Shenzhen, Guangdong 518000 (CN); LIU, Qingsong, Shenzhen, Guangdong 518000 (CN); ZHOU, Guofeng, Shenzhen, Guangdong 518000 (CN); RUI, Min, Shenzhen, Guangdong 518000 (CN); TANG, Shujian, Shenzhen, Guangdong 518000 (CN); LU, Guangyao, Shenzhen, Guangdong 518000 (CN); HU, Lunbao, Shenzhen, Guangdong 518000 (CN); ZHANG, Chao, Shenzhen, Guangdong 518000 (CN); QIAO, Jianyi, Shenzhen, Guangdong 518000 (CN); SU, Xiaowei, Shenzhen, Guangdong 518000 (CN)
(74) Representative: Greaves Brewster LLP
(86) International application number: PCT/CN2021/137096
(87) International publication number: WO 2022/122015

(57) **Abstract**

The present invention provides a control rod driving mechanism (100) with safety protection function, including a rod position detector assembly, a pressure-resistant housing assembly, a claw assembly, a driving lever assembly, a coil assembly and a safety protection device. The safety protection device includes a fixing magnetic pole, a locking coil, a spring, a movable armature, a claw and a transition support sleeve, wherein a sealing housing is coupled to the transition support sleeve via the fixing magnetic pole, the transition support sleeve is coupled to the claw assembly, the movable armature is slidably arranged in the transition support sleeve. One end of the spring elastically abuts against the movable armature, and the other end of the spring elastically abuts against the fixing magnetic pole or the transition support sleeve. The claw is mounted on the transition support sleeve and linked with the movable armature, and the driving lever assembly penetrates the transition support sleeve and the fixing magnetic pole. The locking coil is mounted on the coil assembly and the movable armature slides axially such that the claw pivotally swings for engaging with or releasing from the driving rod assembly, to achieve a reliable safety protection function and realize safe shutdown of the reactor

## Description

### FIELD OF THE INVENTION

The present application generally relates to nuclear reactors and, more particularly, relates to a control rod driving mechanism with safety protection function.

### BACKGROUND OF THE INVENTION

It is well known in the art that, some reactors are generally in the state of periodic swing. In extreme environmental conditions, large angle swing or even overturn may occur to the reactor.

When the reactor sways at a small angle, the control rod driving mechanism of the reactor still can realize the control rod drop function to ensure the safe shutdown of the reactor. However, the control rod assembly which has been inserted into the bottom of the core may detach from the core when the reactor tilts or even overturns and, therefore, the safe shutdown of the reactor cannot be guaranteed.

At present, the reactor control rod driving mechanism used at home and abroad does not have a safety protection mechanism with the function of locking tipping and what is needed, therefore, is to provide a control rod driving mechanism with safety protection function which can overcome the disadvantages as mentioned above.

### SUMMARY OF THE INVENTION

One object of the present invention is to provide a control rod driving mechanism with safety protection function, which can ensure that the control rod assembly is locked in the core after the reactor overturns under extreme environment conditions, to achieve safe shutdown of the reactor.

According to one embodiment of the present invention, a control rod driving mechanism with safety protection function, includes safety protection device, a rod position detector assembly, a pressure-resistant housing assembly, a claw assembly, a driving lever assembly, a coil assembly, the rod position detector assembly being sleeved on a travel sleeve of the pressure-resistant housing assembly, the claw assembly being sleeved on a sealing housing in the pressure-resistant housing assembly, the driving lever assembly being mounted in the sealing housing, the driving lever assembly penetrating the claw assembly and extending toward the travel sleeve, the coil assembly being sleeved on the sealing housing, wherein the control rod driving mechanism with safety protection function includes a fixing magnetic pole , a locking coil, a spring, a movable armature, a claw and a transition support sleeve, an outer side of the fixing magnetic pole is mounted in the sealing housing, an inner side of the fixing magnetic pole is fixedly sleeved on a first end of the transition support sleeve, a second end of the transition support sleeve is coupled to the claw assembly, the movable armature is slidably sleeved on the transition support sleeve, one end of the spring elastically abuts against the movable armature, the other end of the spring elastically abuts against the fixing magnetic pole or the transition support sleeve, the spring constantly tends to drive the movable armature to slide along a direction away from the fixing magnetic pole, the claw is pivotally mounted on the transition support sleeve and is linked with the movable armature, the driving lever assembly penetrates the transition support sleeve and the fixing magnetic pole, the locking coil is mounted on the coil assembly, and the movable armature links the claw to pivotally swing for engaging with or releasing from the driving rod assembly.

Preferably, the safety protection device also includes a self-locking assembly mounted at the movable armature, the transition support sleeve is provided with a locking structure for matching and locking with the self-locking assembly, the movable armature locks the self-locking assembly and the locking structure in the process of linking the claw to engage with the driving lever assembly, to prevent the movable armature from sliding away from the fixing magnetic pole under an elastic force of the spring.

Preferably, the locking structure is a groove.

Preferably, the bottom wall of the groove is inclined toward a center line of the transition support sleeve in a direction far from the fixing magnetic pole, the side wall of the groove has a blocking structure for matching with the self-locking assembly, the blocking structure is positioned in front of the bottom wall of the groove along a direction away from the fixing magnetic pole, the self-locking assembly prevents the movable armature from sliding away from the fixing magnetic pole under an elastic force of the spring by blocking coordination with the blocking structure.

Preferably, the self-locking assembly includes a locking member and an elastic reset member, the locking member is slidably mounted on the movable armature along a sliding direction intersecting the fixing magnetic pole, the elastic reset member is arranged between the locking member and the movable armature, the elastic reset member constantly tends to drive the locking member to slide to lock with the locking structure.

Preferably, the self-locking assembly also includes a plug, the movable armature is provided with a step mounting space extending through the side wall of the movable armature, a small end of the step mounting space is oriented to the transition support sleeve, a large end of the step mounting space is oriented to the sealing housing, the locking member is slidably mounted in the step mounting space, the locking member partly extends from the small end of the step mounting space, the plug is installed in the large end of the step mounting space, the elastic reset member elastically abuts against the plug and the locking member.

Preferably, the elastic reset member is sleeved on the locking member, the locking member is a pin tongue structure, and the elastic reset member is a compression spring.

Preferably, an inner side of the fixing magnetic pole is provided with an activity space for axial telescopic deformation of the spring, the activity space penetrates the fixing magnetic pole in a direction toward the movable armature, the spring is in the activity space, the spring is also sleeved on the transition support sleeve, a second end of the spring elastically abuts against the fixing magnetic pole, a shoulder of the fixing magnetic pole is installed in the sealing housing, and a second end of the transition support sleeve is threaded to the claw assembly.

Preferably, the safety protection device also includes a connecting rod located in the movable armature, one end of the connecting rod is hinged with the movable armature, and the other end of the connecting rod is hinged with the claw, and the transition support sleeve is provided with a dodging space for the claw to pivotally swing for engaging with or releasing from the driving lever assembly.

Preferably, the claw has single tooth structure having a large tooth width, and a tooth width of the claw is larger than a tooth groove of the driving lever assembly.

According to another embodiment of the present invention, a safety protection device includes:
a sealing housing;
a driving lever assembly penetrating into the sealing housing; and
a fixing magnetic pole arranged in the sealing housing and a movable armature sleeved on the driving rod assembly, the movable armature being connected to a claw, and an elastic element being arranged between the fixing magnetic pole and the movable armature;
wherein when the fixing magnetic pole is electromagnetized, the movable armature overcomes the elastic force of the elastic element and slides to the fixing magnetic pole under the magnetic force of the fixing magnetic pole, so that the claw engages with the driving lever assembly.

Compared with the prior art, in the safety protection device of the present invention, when the driving lever assembly is swayed or overturned, the fixing magnetic pole can be electromagnetized, and under the magnetic force of the fixing magnetic pole, the movable armature can overcome the elastic force of the elastic member and slide towards the fixing magnetic pole. The slide of the movable armature makes the claw fasten on the driving lever assembly, so as to maintain the driving lever assembly in proper position and ensure the safety of the driving lever assembly.

Preferably, the safety protection device further includes a transition support sleeve sleeved on the driving lever assembly, the movable armature is sleeved on the transition support sleeve and axially slidable, the claw is pivotally coupled to the transition support sleeve and is linked with the movable armature.

Preferably, the movable armature is provided with a self-locking assembly, the transition support sleeve is provided with a locking structure for matching and locking with the self-locking assembly, after the claw engages with the driving lever assembly, the self-locking assembly locks the locking structure.

Preferably, the locking structure is a groove, and the side wall of the groove has a blocking structure for blocking the self-locking assembly, after the claw engages with the driving lever assembly, the self-locking assembly extends into the groove and engages with the blocking structure, thereby preventing the movable armature from sliding away from the fixing magnetic pole under the elastic force of the elastic element.

Preferably, the self-locking assembly includes a locking member and an elastic reset member arranged between the locking member and the movable armature, the elastic reset member drives the locking member to elastically abut against the transition support sleeve.

Preferably, the elastic reset member is arranged on the locking member, the locking member is a pin latch structure, and the elastic reset member is a compression spring.

Preferably, an outer side of the fixing magnetic pole is fixedly arranged on the sealing housing and an inner side of the fixing magnetic pole is fixedly sleeved on the transition support sleeve, the inner side of the fixing magnetic pole is provided with an activity space for axial telescopic deformation of the elastic element, and the elastic element is arranged in the activity space and sleeved on the transition support sleeve.

Preferably, the safety protection device further includes a connecting rod, one end of the connecting rod is hinged with the movable armature, the other end of the connecting rod is hinged with the claw, and the transition support sleeve is provided with a dodging space for the claw to pivotally swing for engaging with or releasing from the driving lever assembly.

Preferably, the sealing housing is provided with a locking coil for magnetizing the fixing magnetic pole.

According to yet another embodiment of the present invention, a control rod driving mechanism includes a rod position detector assembly, a pressure-resistant housing assembly provided with a sealing housing, a claw assembly, a driving lever assembly and a coil assembly, and a safety protection device of the present invention, the rod position detector assembly is sleeved on a travel sleeve arranged in the pressure-resistant housing assembly, the driving lever assembly penetrates the claw assembly and extends to the travel sleeve, the claw assembly is mounted in the sealing housing, a transition support sleeve arranged on the safety protection device is connected with the claw assembly, and the locking coil is sleeved outside the sealing housing.

Compared with the prior art, the control rod driving mechanism of the present invention includes a safety protection device, the safety protection device includes a fixing magnetic pole, a locking coil, a spring, a movable armature, a claw and a transition support sleeve. The outer side of the fixing magnetic pole is installed in a sealing housing, the inner side of the fixing magnetic pole is fixedly sleeved with the first end of the transition support sleeve, and the second end of the transition support sleeve is coupled to the claw assembly. The movable armature is sleeved on the transition support sleeve and axially slidable, one end of the springs elastically abuts against the movable armature, the other end of the spring elastically abuts against the fixing magnetic pole or the transition support sleeve, and the spring constantly tends to drive the movable armature to slide away from the fixing magnetic pole, the claw is pivotally mounted on the transition support sleeve and is linked with the movable armature. The driving lever assembly also penetrates into the transition support sleeve and the fixing magnetic pole. The locking coil is installed on the coil assembly, and the movable armature links the claw during the axial sliding process to make the claw to pivotally swing for engaging with or releasing from the driving lever assembly.

Therefore, via cooperation of the fixing magnetic pole, the locking coil, the spring, the movable armature, the claw and the transition support sleeve, the control rod driving mechanism of the present invention has reliable safety protection function, which can ensure that the control rod assembly is locked reliably in the core after the reactor overturns under extreme environmental conditions. At the same time, the claw is used to lock the driving lever assembly, and the operation principle is simple and the structure is compact. In addition, the first end of the transition support sleeve is sleeved on the inner side of the fixing magnetic pole and the second end of the transition support sleeve is connected with the claw assembly, the outer side of the fixing magnetic pole is arranged in the sealing housing, so that the fixing magnetic pole, the transition support sleeve and the claw assembly are formed as a whole. The locking coil is arranged on the coil assembly, and the locking coil and the coil assembly are formed as a whole to facilitate installation and positioning.

### BRIEF DESCRIPTION OF THE DRAWINGS

The control rod driving mechanism with safety protection function of the present invention will now be described in detail below with reference to the accompanying drawings, in which:
Fig. 1 depicts a perspective view having a partially cross-sectional portion of a control rod driving mechanism with safety protection function according to one embodiment of the present invention;
Fig. 2 depicts a partially sectional-view of a safety protection device, a sealing housing and a driving lever assembly in the control rod driving mechanism with safety protection function according to one embodiment of the present invention, in which the claw locks the driving lever assembly;
Fig. 3 depicts a partially sectional-view of a safety protection device, a sealing housing and a driving lever assembly in the control rod driving mechanism with safety protection function according to one embodiment of the present invention, in which the claw does not lock the driving lever assembly;
Fig. 4 depicts a partially cross-sectional view of a driving lever assembly of the control rod driving mechanism with safety protection function according to one embodiment of the present invention;
Fig. 5 depicts a partially cross-sectional view of a claw of the safety protection device of the control rod driving mechanism with safety protection function according to one embodiment of the present invention.

### DETAILED DESCRIPTION OF THE INVENTION

In order to make the objective, technical solutions and technical effects of the present invention clearer, the present invention will be further described in detail below in conjunction with the accompanying drawings and embodiments. It should be understood that the embodiments described herein are only for explaining the present invention, not for limiting the scope of the present invention.

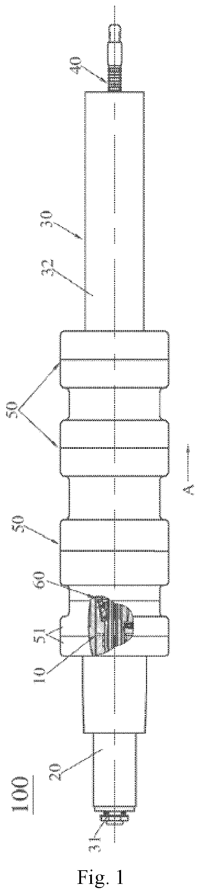

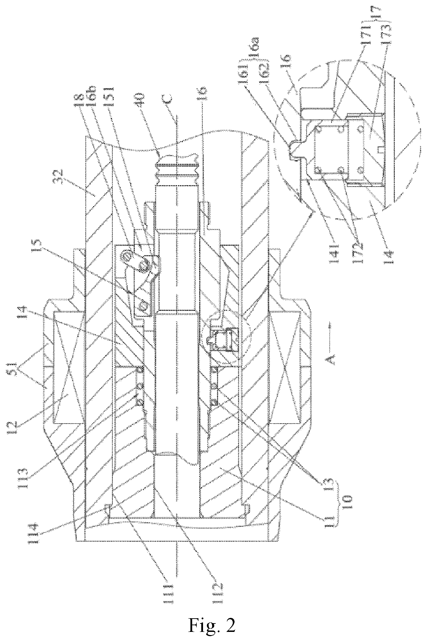

Referring to Figs. 1 and 2, the control rod driving mechanism 100 with safety protection function includes a safety protection device 10, a rod position detector assembly 20, a pressure- resistant housing assembly 30, a driving lever assembly 40, a coil assembly 50 and a claw assembly 60. The rod position detector assembly 20 is arranged on a travel sleeve 31 in the pressure-resistant housing assembly 30 to provide the actual position signal of the driving lever assembly 40 when the control rod driving mechanism 100 is running. The claw assembly 60 is arranged in the sealing housing 32 of the pressure-resistant housing assembly 30, preferably hanging in the sealing housing 32, for grasping, lifting and inserting functions of the driving lever assembly 40; The driving lever assembly 40 is mounted within the seal housing 32, and the driving lever assembly 40 is also penetrated into the claw assembly 60 (a space enclosed by the claw assembly 60) and extends to the travel sleeve 31. The travel sleeve 31 provides the driving lever assembly 40 with a motion space, and the coil assembly 50 is arranged outside the seal housing 32 for powering the movement of the claw assembly 60.

The specific structures of the coil assembly 50, the claw assembly 60, the driving lever assembly 40, the rod position detector assembly 20 and the pressure-resistant housing assembly 30 are well known in the art, and will not be described in detail anymore. The following description of the details will focus on the safety protection device 10.

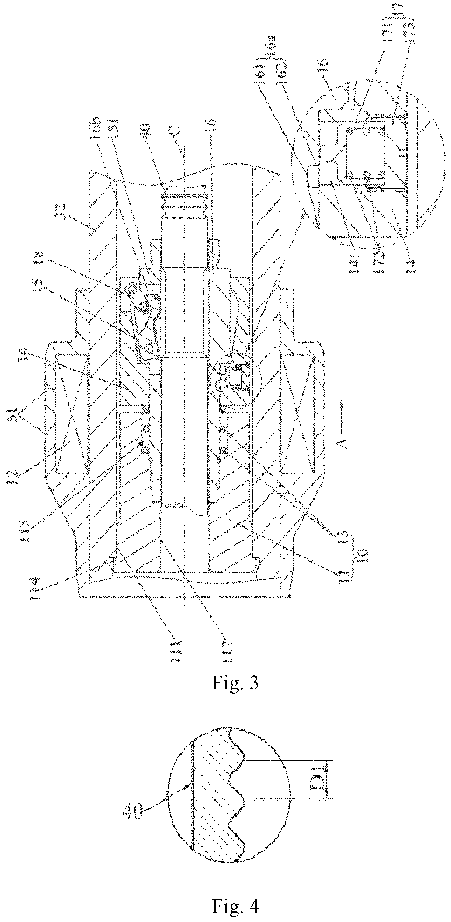

As shown in Figs. 2 and 3, the present invention provides a safety protection device including:
a sealing housing 32;
a driving lever assembly 40, which is penetrated in the sealing housing 32; and
a fixing magnetic pole 11 disposed in the sealing housing 32 and a movable armature 14 sleeved on the driving lever assembly 40, the driving lever assembly being connected with a claw 15, and an elastic element being arranged between the fixing magnetic pole 11 and the movable armature 14,
wherein, when the fixing magnetic pole 11 is powered and magnetized, the movable armature 14 can overcome the elastic force of the elastic element under the magnetic force of the fixing magnetic pole 11, to slide towards the fixing magnetic pole 11, and drive the claw 15 to engage with the driving lever assembly 40.

Relative to the prior art, in the safety protection device of the present invention, when the driving lever assembly 40 swings or overturns, the fixing magnetic pole 11 can be powered and magnetized, at which time, the movable armature 14 is capable of overcoming the elastic force of the elastic element and sliding towards the fixing magnetic pole 11 under the magnetic force of the fixing magnetic pole 11, and the sliding of the movable armature 14 causes the claw 15 to couple to the driving lever assembly 40, to maintain the driving lever assembly 40 in place to ensure the safety of the driving lever assembly 40.

Further referring to Figs. 2 and 3, according to one preferred embodiment of the present invention, the safety protection device 10 includes a fixing magnetic pole 11, a locking coil 12, a spring 13, a movable armature 14, a claw 15 and a transition support sleeve 16. The outer side 111 of the fixing magnetic pole 11 is arranged in the sealing housing 32, and preferably is arranged in the sealing housing 32 by means of the shoulder 114. The inner side 112 of the fixing magnetic pole 11 is fixedly sleeved with the first end of the transition support sleeve 16, to couple the fixing magnetic pole 11 to the transition support sleeve 16. The second end of the transition support sleeve 16 is coupled to the claw assembly 60, preferably is coupled to the claw assembly 60 via thread connection, for example, but not limited to, a thread connection with the lifting magnetic pole of the claw assembly 60, so that the transition support sleeve 16 is fixed with the claw assembly 60, thereby forming the fixing magnetic pole 11, the transition support sleeve 16 and the claw assembly 60 as a whole. The movable armature 14 can be sheathed axially on the transition support sleeve 16 so that the movable armature 14 can axially slide on the transition support sleeve 16.

One end of the spring 13 is elastically engaged with the movable armature 14, and the other end of the spring 13 is elastically engaged with the fixing magnetic pole 11. The other end of the spring 13 can also elastically abut with the transition support sleeve 16. In this manner, the spring 13 also has a tendency to drive the movable armature 14 away from the fixing magnetic pole 11 in a direction indicated by Arrow A. The claw 15 is pivotally assembled to the transition support sleeve 16 and is connected with the movable armature 14. The driving lever assembly 40 is also penetrated into the transition support sleeve 16 and the fixing magnetic pole 11. The locking coil 12 is mounted on the coil assembly 50, in particular on the magnetic yoke 51 of the coil assembly 50. The movable armature 14 makes the claw 15 to do the pivot movement of engaging or disengaging with the driving lever assembly 40 during the axial sliding process.

Specifically, in Figs. 2 and 3, to ensure the reliability of locking to the driving lever assembly 40, the safety protection device 10 also includes a self-locking assembly 17 mounted at the movable armature 14. The transition support sleeve 16 is provided with a locking structure 16a which is matched with the self-locking assembly 17. The movable armature 14 drives the self-locking assembly 17 and the locking structure 16a to lock during the fastening process between the claw 15 and the driving lever assembly 40, in order to prevent the movable armature 14 from sliding away from the fixing magnetic pole 11 under the elastic force of the spring 13, effectively prevents the safety protection device 10 from failing to provide a locking function when the power of the locking coil 12 is cut off during the locking of the driving lever assembly 40. For example, the locking structure 16a is a groove, preferably an annular groove, to facilitate the manufacture of the locking structure 16a.

As shown in Figs. 2 and 3, the bottom wall 161 of the groove is tilted away from the fixing magnetic pole 11 in a direction indicated by arrow A towards the center line C of the transition support sleeve 16. The side wall of the groove has a blocking structure 162 for matching with the self-locking assembly 17, and the blocking structure 162 is positioned in front of the bottom wall 161 of the groove in a direction far from the fixing magnetic pole 11. The self-locking assembly 17 prevents the movable armature 14 from sliding away from the fixing magnetic pole 11 under the elastic force of the spring 13 due to the cooperation of the self-locking assembly 17 and the blocking structure 162, to reliably increase the locking effect of the safety protection device 10 on the driving lever assembly 40.

Specifically, in Figs. 2 and 3, the self-locking assembly 17 includes a locking member 171 and an elastic reset member 172. The locking member 171 slides on the movable armature 14 in a sliding direction intersecting the fixing magnetic pole 11, the elastic reset member 172 is arranged between the locking member 171 and the movable armature 14. The elastic reset member 172 drives the locking member 171 to elastically abut against the transition support sleeve 16, and when the claw 15 is engaged with the driving lever assembly 40, slide to a position for locking with the locking structure 16a.

More specifically, the self-locking assembly 17 also includes a plug 173. The movable armature 14 has a step mounting space 141 through the side wall of the movable armature 14. A small end of the step mounting space 141 towards a transition support sleeve 16, a large end of the step mounting space 141 faces the sealing housing 32, and the locking member 171 is slidable in the step mounting space 141, and the locking member 171 also partially extends out from the small end of the step mounting space 141. The plug 173 is installed in the large end of the step mounting space 141, and the elastic reset piece 172 is elastically connected between the plug 173 and the locking member 171. Preferably, the elastic reset member 172 is arranged around the locking member 171. Due to the step mounting space 141 provided on the plug 173, the locking member 171, the elastic reset member 172 and the movable armature 14, the installation and disassembly of a self-locking assembly 17 on the movable armature 14 are facilitated, and it is more reliable to ensure that the self-locking assembly 17 is automatically locked with the locking structure 16a on the transition support sleeve 16 when the movable armature 14 is fully engaged by the fixing magnetic pole 11, thereby ensuring the reliability of the claw 15 locking on the driving rod assembly 40. For example, the locking member 171 is a pin latch structure and the elastic reset member 172 is a compression spring to simplify the structure.

As shown in Figs. 2 and 3, the inner side 111 of the fixing magnetic pole 11 is provided with an activity space 113 for the spring 13 to do an axial telescopic deformation, and the activity space 113 penetrates the fixing magnetic pole 11 in a direction towards the movable armature 14, the second end of the spring 13 elastically abuts against the fixing magnetic pole 11, which makes the assembly of the spring 13 more reasonable and compact, and ensure the reliability of the elastic deformation the spring 13. For example, spring 13 is a compression spring or other elastic elements.

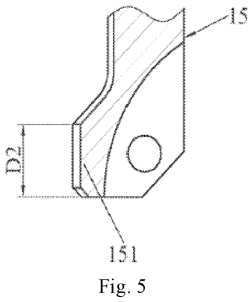

As shown in Figs. 2 and 3, in order to make the connection of the movable armature 14 and the claw 15 more reliable, the safety protection device 10 also includes a connecting rod 18. One end of the connecting rod 18 is hinged to the movable armature 14, the other end of the connecting rod 18 is hinged with the claw 15, and the transition support sleeve 16 is provided with a dodging space 16b for the claw 15 to engage or disengage with the driving lever assembly 40. For example, in Figs. 4 and 5, the claw 15 has a single tooth structure having a large tooth width, and the tooth width D2 of the claw 15 is larger than the tooth groove D1 of the driving lever assembly 40, to ensure that the safety protection device 10 at work does not completely lock the control rod during the process of the control rod dropping, and can reduce the adverse influence on the normal action of the control rod driving mechanism 100 of the present invention when the safety protection device 10 is triggered by mistake. In Fig. 5, number 151 refers to the tooth of the claw 15.

The working principle of the safety protection device 10 is illustrated in view of Figs. 2 and 3. When the control rod driving mechanism 100 of the present invention is in normal operation, the safety protection device 10 does not work, as shown in Fig. 3. At this time, the locking coil 12 is not powered, the fixing magnetic pole 11 has no magnetic force, and the movable armature 14 is kept in the lowest position due to the push of the spring 13, therefore, the claw 15 is kept in a non-swinging state, so that there is no clamping action on the driving lever assembly 40.

The safety protection device 10 is activated when the reactor is swaying or even tipping, as shown in Fig. 2, where the locking coil 12 is powered and the fixing magnetic pole 11 is magnetized. Under the action of magnetic force, the movable armature 14 overcomes the elastic force of the spring 13 to slide towards the fixing magnetic pole 11, and drives the claw 15 to swing out, so as to clamp and fasten the driving lever assembly 40. When the movable armature 14 is fully engaged by the fixing magnetic pole 11, the locking member 171 enters the locking structure 16a of the transition support sleeve 16 under the pushing action of the elastic reset member 172. In this manner, the movable armature 14 is prevented from sliding away from the fixing magnetic pole 11 under the elastic force of the spring 13 by the coorperation with the blocking structure. Even if the power is cut off at this time, the claw 15 always clamps the driving lever assembly 40 to realize the locking function of the driving lever assembly 40. The safety protection device 10 has a structure of open in power-off state and closed in power-on state. However, according to actual requirements, the safety protection device 10 can also be changed to have a structure of open in power-on state and closed in power-off state.

Compared with the prior art, the control rod driving mechanism 100 of the present invention includes a safety protection device 10, the safety protection device 10 includes a fixing magnetic pole 11, a locking coil 12, a spring 13, a movable armature 14, a claw 15 and a transition support sleeve 16. The outer side 111 of the fixing magnetic pole 11 is installed in a sealing housing 32, the inner side 112 of the fixing magnetic pole 11 is fixedly sleeved with the first end of the transition support sleeve 16, and the second end of the transition support sleeve 16 is coupled to the claw assembly 60. The movable armature 13 is axially slildable and sheathed on the transition support sleeve 16, and one end of the spring 13 is elastically engaged with the movable armature 14, the other end of the spring 13 is elastically connected with the fixing magnetic pole 11 or the transition support sleeve 16, and the spring 13 has a constant tendency to drive the movable armature 14 to slide away from the fixing magnetic pole 11, the claw 15 is pivoted on the transition support sleeve 16 and is connected with the movable armature 14. The driving lever assembly 40 is also penetrated into the transition support sleeve 16 and the fixing magnetic pole 11. The locking coil 12 is installed on the coil assembly 50, and the movable armature 14 is connected with the claw 15 during the axial sliding process to make a pivot movement of engaging or disengaging with the driving lever assembly 40.

Therefore, via cooperation of the fixing magnetic pole 11, the locking coil 12, the spring 13, the movable armature 14, the claw 15 and the transition support sleeve 16, the control rod driving mechanism 100 of the present invention has reliable safety protection function, which can ensure that the control rod assembly is locked reliably in the core after the reactor overturns under extreme environmental conditions. At the same time, the claw 15 is used to lock the driving lever assembly 40, and the operation principle is simple and the structure is compact. In addition, the first end of the transition support sleeve 16 is connected with the inner side 112 of the fixing magnetic pole 11 and the second end of the transition support sleeve 16 is connected with the claw assembly 60, the outer side 111 of the fixing magnetic pole 11 is arranged in the sealing housing 32, so that the fixing magnetic pole 11, the transition support sleeve 16 and the claw assembly 60 are formed as a whole. The locking coil 12 is arranged on the coil assembly 50, and the locking coil 12 and the coil assembly 50 are formed as a whole to facilitate installation and positioning.

It should be noted that, in use, the control rod driving mechanism 100 of the present invention is vertically installed on the top cover of the reactor pressure vessel. At the same time, the coil assembly 50 well-known in the art includes three magnetic yokes 51 and three groups of coils, each group of coil being accommodated in a magnetic yoke 51. When the locking coil 12 is mounted on the coil assembly 50, an additional magnetic yoke 51 is required to add to the coil assembly 50, to accommodate the locking coil 12 for mounting the locking coil 12 on the coil assembly 50.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A control rod driving mechanism (100) with safety protection function, comprising a rod position detector assembly (20), a pressure-resistant housing assembly (30), a claw assembly (60), a driving lever assembly (40) and a coil assembly (50), the rod position detector assembly (20) being sleeved on a travel sleeve (31) of the pressure-resistant housing assembly (30), the claw assembly (60) being sleeved on a sealing housing (32) of the pressure-resistant housing assembly (30), the driving lever assembly (40) being mounted in the sealing housing (32), the driving lever assembly (40) penetrating the claw assembly (60) and extending toward the travel sleeve (31), the coil assembly (50) being sleeved on the sealing housing (32), **characterized in that** the control rod driving mechanism (100) with safety protection function comprises a safety protection device (10), the safety protection device (10) comprises a fixing magnetic pole (11), a locking coil (12), a spring (13), a movable armature (14), a claw (15) and a transition support sleeve (16), wherein an outer side (111) of the fixing magnetic pole (11) is mounted in the sealing housing (32), an inner side (112) of the fixing magnetic pole (11) is fixedly sleeved on a first end of the transition support sleeve (16), a second end of the transition support sleeve (16) is coupled to the claw assembly (60), the movable armature (14) is slidably sleeved on the transition support sleeve (16), one end of the spring (13) elastically abuts against the movable armature (14), the other end of the spring (13) elastically abuts against the fixing magnetic pole (11) or the transition support sleeve (16), the spring (13) constantly tends to drive the movable armature (14) to slide along a direction away from the fixing magnetic pole (11), the claw (15) is pivotally mounted on the transition support sleeve (16) and is linked with the movable armature (14), the driving lever assembly (40) penetrates the transition support sleeve (16) and the fixing magnetic pole (11), the locking coil (12) is mounted on the coil assembly (50), and the movable armature (14) links with the claw (15) in axial sliding to pivotally swing for engaging with or releasing from the driving rod assembly (40).

2. The control rod driving mechanism (100) with safety protection function according to claim 1, **characterized in that** the safety protection device (10) also comprises a self-locking assembly (17) mounted at the movable armature (14), the transition support sleeve (16) is provided with a locking structure (16a) for matching and locking with the self-locking assembly (17), the movable armature (14) locks the self-locking assembly (17) and the locking structure (16a) in process of connecting the claw (15) and the driving lever assembly (40), to prevent the movable armature (14) from sliding away from the fixing magnetic pole (11) under an elastic force of the spring (13).

3. The control rod driving mechanism (100) with safety protection function according to claim 2, **characterized in that** the locking structure (16a) is a groove.

4. The control rod driving mechanism (100) with safety protection function according to claim 3, **characterized in that** a bottom wall (161) of the groove is inclined toward a center line of the transition support sleeve (16) in a direction afar from the fixing magnetic pole (11), and a side wall of the groove has a blocking structure (162) for matching with the self-locking assembly (17), the blocking structure (162) is positioned in front of the bottom wall (161) of the groove along a direction away from the fixing magnetic pole (11), the self-locking assembly (17) prevents the movable armature (14) from sliding away from the fixing magnetic pole (11) under the elastic force of the spring (13) by a blocking coordination with the blocking structure (162).

5. The control rod driving mechanism (100) with safety protection function according to claim 2, **characterized in that** the self-locking assembly (17) comprises a locking member (171) and an elastic reset member (172), the locking member (171) is slidably mounted on the movable armature (14) along a sliding direction intersecting the fixing magnetic pole (11), the elastic reset member (172) is arranged between the locking member (171) and the movable armature (14), and the elastic reset member (172) constantly tends to drive the locking member (171) to slide to lock with the locking structure (16a).

6. The control rod driving mechanism (100) with safety protection function according to claim 5, **characterized in that** the self-locking assembly (17) also comprises a plug (173), the movable armature (14) is provided with a step mounting space (141) extending through a side wall of the movable armature (14), a small end of the step mounting space (141) is oriented to the transition support sleeve (16), a large end of the step mounting space (141) is oriented to the sealing housing (32), the locking member (171) is slidably seated in the step mounting space (141), the locking member (171) partly extends from the small end of the step mounting space (141), the plug (173) is installed in the large end of the step mounting space (141), the elastic reset member (172) elastically abuts against the plug (173) and the locking member (171).

7. The control rod driving mechanism (100) with safety protection function according to claim 6, **characterized in that** the elastic reset member (172) is sleeved on the locking member (171), the locking member (171) has a pin latch structure, the elastic reset member (172) is a compression spring.

8. The control rod driving mechanism (100) with safety protection function according to claim 1, **characterized in that** an inner side (112) of the fixing magnetic pole (11) is provided with an activity space (113) for axial telescopic deformation of the spring (13), the activity space (113) penetrates the fixing magnetic pole (11) in a direction toward the movable armature (14), the spring (13) is seated in the activity space (113), the spring (13) is sleeved on the transition support sleeve (16), a second end of the spring (13) elastically abuts against the fixing magnetic pole (11), a shoulder (114) of the fixing magnetic pole (11) is installed in the sealing housing (32), and a second end of the transition support sleeve (16) is threaded to the claw assembly (60).

9. The control rod driving mechanism (100) with safety protection function according to claim 1, **characterized in that** the safety protection device (10) comprises a connecting rod (18) located in the movable armature (14), one end of the connecting rod (18) is hinged with the movable armature (14), the other end of the connecting rod (18) is hinged with the claw (15), the transition support sleeve (16) is provided with a dodging space (16b) for pivotally swinging of the claw (15) to engage with or release from the driving lever assembly (40).

10. The control rod driving mechanism (100) with safety protection function according to claim 1, **characterized in that** the claw (15) has single tooth structure having a large tooth width, and a tooth width of the claw (15) is larger than a tooth groove of the driving lever assembly (40).

11. A safety protection device (10), **characterized in that** the safety protection device (10) comprises:
a sealing housing (32);
a driving lever assembly (40) penetrating the sealing housing (32); and
a fixing magnetic pole (11) arranged in the sealing housing (32) and a movable armature (14) sleeved on the driving rod assembly (40), the movable armature (14) being connected to a claw (15), and an elastic element being arranged between the fixing magnetic pole (11) and the movable armature (14);
wherein when the fixing magnetic pole (11) is electromagnetized, the movable armature (14) overcomes a elastic force of the elastic element and slides towards the fixing magnetic pole (11) under a magnetic force of the fixing magnetic pole (11), so that the claw (15) engages with the driving lever assembly (40).

12. The safety protection device (10) according to claim 11, **characterized in that** the safety protection device (10) further comprises a transition support sleeve (16) sleeved on the driving lever assembly (40), the movable armature (14) is sleeved on the transition support sleeve (16) and axially slidable, the claw (15) is pivotally coupled to the transition support sleeve (16) and is linked with the movable armature (14).

13. The safety protection device (10) according to claim 12, **characterized in that** the movable armature (14) is provided with a self-locking assembly (17), and the transition support sleeve (16) is provided with a locking structure (16a) matching with the self-locking assembly (17), and after the claw (15) engages with the driving lever assembly (40), the self-locking assembly (17) locks the locking structure (16a).

14. The safety protection device (10) according to claim 13, **characterized in that** the locking structure (16a) is a groove, a side wall of the groove has a blocking structure (162) for blocking the self-locking assembly (17), after the claw (15) engages with the driving lever assembly (40), the self-locking assembly (17) extends into the groove and engages with the blocking structure (162), thereby preventing the movable armature (14) from sliding away from the fixing magnetic pole (11) under an elastic force of the elastic element.

15. The safety protection device (10) according to claim 13, **characterized in that** the self-locking assembly (17) comprises a locking member (171) and an elastic reset member (172) arranged between the locking member (171) and the movable armature (14), the elastic reset member (172) drives the locking member (171) to elastically abuts against the transition support sleeve (16).

16. The safety protection device (10) according to claim 15, **characterized in that** the elastic reset member (172) is sleeved on the locking member (171), the locking member (171) has a pin latch structure, and the elastic reset member (172) is a compression spring.

17. The safety protection device (10) according to claim 12, **characterized in that** an outer side (111) of the fixing magnetic pole (11) is fixedly arranged on the sealing housing (32), an inner side (112) of the fixing magnetic pole (11) is fixedly sleeved on the transition support sleeve (16), the inner side (112) of the fixing magnetic pole (11) is provided with an activity space (113) for axial telescopic deformation of the elastic element, and the elastic element is arranged in the activity space (113) and sleeved on the transition support sleeve (16).

18. The safety protection device (10) according to claim 12, **characterized in that** the safety protection device (10) further comprises a connecting rod (18), one end of the connecting rod (18) is hinged with the movable armature (14), the other end of the connecting rod (18) is hinged with the claw (15), the transition support sleeve (16) is provided with a dodging space (16b) for pivotally swinging of the claw (15) to engage with or release from the driving lever assembly (40).

19. The safety protection device (10) according to any one of claims 11 to 18, **characterized in that** the sealing housing (32) is provided with a locking coil (12) for magnetizing the fixing magnetic pole (11).

20. A control rod driving mechanism (100) comprising a rod position detector assembly (20), a pressure-resistant housing assembly (30) provided with a sealing housing (32), a claw assembly (60), a driving lever assembly (40) and a coil assembly (50), the rod position detector assembly (20) being sleeved on a travel sleeve (31) arranged in the pressure-resistant housing assembly (30), and the driving lever assembly (40) penetrating in the claw assembly (50) and extending to the travel sleeve (31), **characterized in that** the control rod driving mechanism (100) comprises a safety protection device (10) according to anyone of claims 11 to 19, wherein the claw assembly (60) is seated in the sealing housing (32), a transition support sleeve (16) arranged on the safety protection device (10) is connected with the claw assembly (50), and the locking coil (12) is sleeved on the sealing housing (32).
